Europäisches Patentamt

European Patent Office

Office européen des brevets

(19)

(11) **EP 1 257 591 B1**

(12) **EUROPÄISCHE PATENTSCHRIFT**

(45) Veröffentlichungstag und Bekanntmachung des Hinweises auf die Patenterteilung:
**12.05.2004 Patentblatt 2004/20**

(51) Int Cl.⁷: $C08G\ 65/26$, $B01J\ 27/26$

(21) Anmeldenummer: **01927689.8**

(86) Internationale Anmeldenummer:
**PCT/EP2001/002033**

(22) Anmeldetag: **22.02.2001**

(87) Internationale Veröffentlichungsnummer:
**WO 2001/062826 (30.08.2001 Gazette 2001/35)**

(54) **VERFAHREN ZUR HERSTELLUNG VON POLYETHERPOLYOLEN IN GEGENWART EINES MULTIMETALLCYANIDKOMPLEX-KATALYSATORS**

METHOD FOR PRODUCING POLYETHER POLYOLS IN THE PRESENCE OF A MULTI-METAL CYANIDE COMPLEX CATALYST

PROCEDE DE PRODUCTION DE POLYETHERPOLYOLS EN PRESENCE D'UN CATALYSEUR COMPLEXE CYANURE-POLYMETAL

(84) Benannte Vertragsstaaten:
**AT BE CH CY DE DK ES FI FR GB GR IE IT LI LU MC NL PT SE TR**

(30) Priorität: **24.02.2000 DE 10008630**

(43) Veröffentlichungstag der Anmeldung:
**20.11.2002 Patentblatt 2002/47**

(73) Patentinhaber: **BASF AKTIENGESELLSCHAFT 67056 Ludwigshafen (DE)**

(72) Erfinder:
• **OSTROWSKI, Thomas**
  **44581 Castrop-Rauxel (DE)**
• **HARRE, Kathrin**
  **01109 Dresden (DE)**
• **ZEHNER, Peter**
  **67071 Ludwigshafen (DE)**
• **MÜLLER, Jörn**
  **D-49152 Bad Essen (DE)**

• **STÜTZER, Dieter**
  **67373 Dudenhofen (DE)**
• **GROSCH, Georg, Heinrich**
  **67098 Bad Dürkheim (DE)**
• **WINKLER, Jürgen**
  **01987 Schwarzheide (DE)**
• **BAUER, Stephan**
  **49179 Ostercappeln (DE)**

(74) Vertreter: **Bardehle, Heinz, Dipl.-Ing. Patent- und Rechtsanwälte Bardehle . Pagenberg . Dost . Altenburg . Geissler Theodor-Heuss-Anlage 12 68165 Mannheim (DE)**

(56) Entgegenhaltungen:
EP-A- 0 263 935          WO-A-00/30743
WO-A-99/44739            DE-A- 19 742 978
US-A- 4 472 560

## Beschreibung

Die Erfindung betrifft ein Verfahren zur Herstellung von Polyetherpolyolen.

Polyetherpolyole werden in großem Umfang, insbesondere für die Herstellung von Polyurethanschäumen bereitgestellt. Die bekannten Herstellungsverfahren von Polyetherpolyolen erfolgen in der Regel aus Alkylenoxiden in Gegenwart eines kurzkettigen Starters unter Einsatz unterschiedlicher Katalysatoren, wie Basen, hydrophobierte Doppelschichthydroxide, saure oder lewissaure Systeme, metallorganische Verbindungen oder Multimetallcyanidkomplex-Verbindungen.

Heterogene Multimetallcyanidkomplex-Katalysatoren sind hochselektive und aktive Katalysatoren, die sich insbesondere zur Herstellung von Weichschaumpolyetherpolyolen, bei denen ein hohes Molekulargewicht erreicht werden muß und bei denen lange Oxalkylierungszeiten erforderlich sind, eignen. Durch den Einsatz von Multimetallcyanidkomplex-Katalysatoren können die Herstellungskosten gesenkt werden und gleichzeitig hochwertiges Polyetherpolyol, das zu geruchsarmen und damit hochwertigen Polyurethanschäumen weiterverarbeitet werden kann, erhalten werden. Aus der Literatur ist bekannt, daß Nebenreaktionen, die zur Bildung von Geruchsstoffen und ungesättigten Bestandteilen führen können, kaum auftreten.

Die hohe Aktivität hat allerdings zur Folge, daß die Reaktionswärme in herkömmlichen Reaktoren nicht mehr abgeführt werden kann. Wird die multimetallcyanidkomplexkatalysierte Polyetherpolyolherstellung in Standard-Rührkesseln durchgeführt, so sind die Dosierraten an Alkylenoxid durch die Wärmeabfuhrleistung der Wärmetauscher begrenzt.

Die US 5,811,595 schlägt einen ideal durchmischten Reaktor mit einem oder zwei Wärmetauschern vor, wobei das Polyetherpolyol in den Kreislaufstrom des Wärmetauschers, und das Ethylenoxid in den Reaktor eingespeist wird. Mittels einer Düse wird die Vermischung des Ethylenoxids mit der flüssigen Phase erreicht.

Nachteilig bei diesem Verfahren ist die hohe Umpumpmenge, die zur Aufrechterhaltung der hohen Wärmeabfuhrleistung erforderlich ist sowie die Gefahr der mechanischen Schädigung des heterogenen Katalysators durch die Pumpe. Zudem wird das hochreaktive Ethlyenoxid in den Reaktor eingefüllt, in dem die Wärmeabfuhr wegen der verwendeten Kühlschlangen, insbesondere bei niedrigen Füllgraden aufgrund der kleinen Austauschfläche sehr schlecht ist. Überhitzungen aufgrund der hohen Reaktionsgeschwindigkeit mit der Folge von Produktschädigungen können auftreten. Dies kann sich durch die schlechte Durchmischung im Reaktor verstärken.

Die EP-A-0 850 954 beschreibt ein Verfahren, bei dem die Reaktion im Gasraum oberhalb der Reaktionsflüssigkeit stattfindet. Das Polyetherpolyol wird im Kreis über einen Wärmetauscher gepumpt und durch Düsen zugeführt. Dies hat eine hohe Flüssigkeitsoberfläche zur Folge. Parallel dazu werden Ethylenoxid und Polyetherpolyol über Düsen zudosiert. Die große Oberfläche bewirkt einen guten Stoffaustausch und somit hohe Reaktionsgeschwindigkeiten.

Aufgrund der hohen Reaktionsgeschwindigkeit, die mit diesem Verfahren erreicht werden kann, sind lokale Übertemperaturen in den einzelnen Tröpfchen zu erwarten, die wiederum Produktschädigungen zur Folge haben. Weiterhin ist auch hier die hohe zur Wärmeabfuhr erforderliche Umpumpmenge nicht unbedenklich für den heterogen dispergierten Multimetallcyanidkomplex-Katalysator; die Gefahr von Schädigungen kann nicht ausgeschlossen werden.

Die künstlich vergrößerte Gasphase stellt weiterhin, insbesondere bei der Ethoxylierung, ein Gefahrenpotential dar, da freies Alkylenoxid in der Gasphase vorliegt. Ethylenoxid neigt zum Gasphasenzerfall, der zum Bersten des Reaktors führen kann. Im Fall der Einleitung des Polyetherpolyols oder Ethylenoxids in die Flüssigkeit ist dagegen aufgrund des aktiven Multimetallcyanidkomplexes ein schnelles Abreagieren des Alkylenoxids zu erwarten.

In EP-A-0 419 419 wird ein Strahlschlaufenreaktor, d. h. ein Reaktor mit interner Schlaufenströmung und externem Umpumpkreislauf für Alkoxylierungen niederfunktioneller Alkohole mit Ethylenoxid vorgeschlagen. Die hohen Reaktionstemperaturen von 165°C sowie die niedrigen Funktionalitäten haben jedoch geringe Viskositäten des Reaktionsgemisches zur Folge.

Es war Aufgabe der Erfindung, ein apparativ einfaches Verfahren zur Herstellung von Polyetherpolyolen in Gegenwart von Multimetallcyanidkomplex-Katalysatoren unter Verbesserung der Raumzeitausbeute sowie Vermeidung von örtlichen Überhitzungen und dadurch verstärkt ablaufenden Nebenreaktionen, somit unter Gewährleistung einer hohen Produktqualität, bereitzustellen.

Die Lösung geht aus von einem Verfahren zur Herstellung von Polyetherpolyolen durch Umsetzung von Diolen oder Polyolen mit Ethylenoxid, Propylenoxid, Butylenoxid oder Gemischen hiervon in Gegenwart eines Multimetallcyanidkomplex-Katalysators.

Die Erfindung ist dadurch gekennzeichnet, daß die Umsetzung in einem Reaktor in hochzylindrischer Bauform, mit einer im oberen Reaktorbereich angeordneten, nach unten gerichteten Strahldüse, über die die Edukte und das Reaktionsgemisch zugeführt werden sowie mit einem Abzug bevorzugt im unteren Reaktorbereich, über den das Reaktionsgemisch in einem äußeren Kreislauf mittels einer Pumpe über einen Ausgleichsbehälter der Strahldüse erneut zugeführt wird, mit einem konzentrischen Leitrohr, das sich über die gesamte Länge des Reaktors mit Ausnahme der Reaktorenden erstreckt sowie mit einem im Ringraum integrierten Wärmetauscher, durchgeführt wird.

Der in EP-A-0 419 419 beschriebene vertikale, hochzylindrische Reaktor wurde insbesondere für niedrigviskose flüssige Reaktionsgemische, d.h. für Flüssigkeiten, die unter Reaktionsbedingungen eine Viskosität deutlich unter 10 mPas besitzen, entwickelt.

Die Erfinder des vorliegenden Verfahrens haben demgegenüber überraschend gefunden, daß der aus EP-A-0 419 419 bekannte Reaktortyp auch für höher viskose Reaktionsmedien, wie es die Polyetherpolyole der vorliegenden Erfindung sind, eingesetzt werden kann. Polyetherpolyole besitzen in der Regel hohe Viskositäten, bei Raumtemperatur etwa im Bereich von 80 bis 1500 mPas, unter Reaktionsbedingungen (ca. 100 bis 130°C) immer noch oberhalb 20 mPas, häufig oberhalb 100 mPas. Es ist bekannt, daß die Grenzschicht zwischen Wärmetauscher und Reaktionsmischung mit steigender Viskosität zunimmt, mit der Folge, daß die Wärme immer schlechter abgeführt werden kann. Nach dem erfindungsgemäßen Verfahren konnte trotz der erhöhten Viskosität überraschend eine ausreichende Wärmeabfuhr erreicht werden, so daß hohe Alkylenoxiddosiergeschwindigkeiten mit der Folge einer verbesserten Raumzeitausbeute und somit einer erhöhten Produktivität sowie mit einer guten Produktqualität realisiert werden konnten. Lokale Übertemperaturen, die zu Produktschädigung führen könnten, wurden vermieden.

Zudem wäre bei der Reaktionsführung mit externem Umpumpkreislauf eine Ablagerung von Katalysator im äußeren Umpumpfkreislauf sowie eine Schädigung des Katalysators durch die Pumpe zu erwarten gewesen, mit der Folge einer Verlangsamung der Reaktion, da aufgrund der niedrigen eingesetzten Katalysatorkonzentrationen von unterhalb 500 ppm bereits geringe Verluste an Katalysator zu einem starken Aktivitätsverlust führen sollten. Weiterhin wäre aufgrund des externen Umpumpkreislaufs eine Verschiebung der Molekulargewichtsverteilung zu erwarten gewesen, da stets ein Teil des Produkts im äußeren Kreislauf verbleibt. Wieder Erwarten wurden die aufgeführten Nachteile nicht beobachtet, sondern im Gegenteil ein Produkt mit niedriger Dispersivität der Molmassenverteilung, d. h. mit ausgezeichneter Produktqualität erhalten.

In mit Wärmetauscherplatten ausgestatteten Reaktoren besteht die Gefahr, daß sich heterogene Katalysator in Ecken, Winkeln oder sonstigen ungenügend angeströmten Stellen absetzt und in Folge dessen für die katalytische Reaktion nicht mehr oder nur in ungenügenden Maße zur Verfügung steht. Dieses Problem ist bei relativ hohen Katalysatorkonzentrationen nicht ganz so kritisch, weil sich ein Katalysatorverlust in diesem Fall nicht extrem auf die Qualität der Katalyse und der Produkte auswirkt. Dagegen bedeutet bei niedrigen Katalysatorkonzentrationen. beispielsweise 100 ppm oder weniger, der Verlust an verfügbarem Katalysator schon in einer Größenordnung von einigen 10 ppm einen dramatischen absoluten Verlust an Katalysatormasse und damit an Katalysatoraktivität. Die Folge ist eine deutlich schlechtere Produktqualität, breitere Molekulargewichtsverteilungen sowie hochmolekulare Anteile. Demgegenüber wurde überraschend gefunden, daß bei dem erfindungsgemäßen Verfahren trotz sehr niedriger Katalysatorkonzentrationen derartige Probleme nicht auftraten, und keine Verschlechterung der Produktqualität stattfand.

Erfindungsgemäß werden Diole oder Polyole zusammen mit Ethylenoxid, Propylenoxid, Butylenoxid oder Gemischen hiervon in Gegenwart eines Multimetallcyanidkomplex-Katalysators einem vertikal, hochzylindrischen Reaktor mit von einem Wärmetauscher durchströmten Wärmetauscherplatten über eine im oberen Reaktorbereich angeordnete, nach unten gerichtete Strahldüse zugeführt sowie über einen Abzug, der bevorzugt im unteren Reaktorbereich angeordnet ist, über einen äußeren Kreislauf mittels einer Pumpe über einen Ausgleichsbehälter der Strahldüse erneut zugeführt.

Die Erfindung enthält keine Einschränkungen bezüglich des einsetzbaren Multimetallcyanidkomplex-Katalysators; es kann sich um amorphe, bevorzugt aber um zumindest teilweise, überwiegend oder vollständig kristalline Formen handeln. Gegebenenfalls ist der Katalysator geträgert.

Besonders bevorzugt werden Multimetallcyanidkomplex-Katalysatoren der allgemeinen Formel (I)

$$M^1_a[M^2(CN)_b L^1_c]_d \cdot e(M^1_f X_g) \cdot hL^2 \cdot iH_2O \qquad (I)$$

eingesetzt, in der

$M^1$ mindestens ein Element aus der Gruppe, bestehend aus Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II), Cd(II). Hg(II), Pd(II), Pt(II), V(III), Mg(II), Ca(II), Sr(II), Ba(II) und Cr(III) ist,

$M^2$ mindestens ein Element aus der Gruppe, bestehend aus Fe(II), Fe(III), Co(III), Cr(III), Mn(II), Mn(III), Ir(III), Rh(III), Ru(II), V(IV), V(V), Co(II) und Cr(II) ist,

$L^1$ mindestens ein Ligand aus der Gruppe, bestehend aus Cyanid, Carbonyl, Cyanat, Isocyanat, Nitril, Thiocyanat und Nitrosyl ist,

X ein Formiatanion, Acetatanion oder Propionatanion

$L^2$ mindestens ein mit Wasser mischbarer Ligand aus der Gruppe, bestehend aus Alkoholen, Aldehyden, Ketonen, Ethern, Polyethern, Estern, Harnstoffderivaten, Amiden, Nitrilen und Sulfiden ist,

a, b, d, e, f, g, ganze oder gebrochene Zahlen größer Null und

c, h, i ganze oder gebrochene Zahlen gleich oder größer Null sind, wobei

a, b, c und d so gewählt sind, daß die Elektroneutralitätsbedingung erfüllt ist und

f und g so gewählt sind, daß die Elektroneutralitätsbedingung erfüllt ist, dessen Röntgendiffraktogramm Reflexe bei mindestens den d-Werten

6,10 Å ± 0,04 Å

5,17 Å ± 0,04 Å

4,27 Å ± 0,02 Å

3,78 Å ± 0,02 Å

3,56 Å ± 0,02 Å

3,004 Å ± 0,007 Å

2,590 Å ± 0,006 Å

2,354 Å ± 0,004 Å

2,263 Å ± 0,004 Å

aufweist, wenn X ein Formiatanion ist, dessen Röntgendiffraktorgramm Reflexe bei mindestens den d-Werten

5,20 Å ± 0,02 Å

4,80 Å ± 0,02 Å

3,75 Å ± 0,02 Å

3,60 Å ± 0,02 Å

3,46 Å ± 0,01 Å

2,824 Å ± 0,008 Å

2,769 Å ± 0,008 Å

2,608 Å ± 0,007 Å

2,398 Å ± 0,006 Å

aufweist, wenn X ein Acetatanion ist, und dessen Röntgendiffraktorgramm Reflexe bei mindestens den d-Werten

5,59 Å ± 0,05 Å

5,40 Å ± 0,04 Å

4,08 Å ± 0,02 Å

3,94 Å ± 0,02 Å

3,76 Å ± 0,02 Å

3,355 Å ± 0,008 Å

3,009 Å ± 0,007 Å

2,704 Å ± 0,006 Å

2,381 Å ± 0,004 Å

aufweist, wenn X ein Propionatanion ist,
oder die ein monoklines Kristallsystem aufweisen, wenn X ein Acetatanion ist.

Derartige Multimetallcyanidkomplex-Katalysatoren sind in DE-A-197 42 978 beschrieben.

Besonders bevorzugt wird ein Multimetallcyanidkomplex-Katalysator vom Zink-Kobalt-Typ eingesetzt.

Der Multimetallcyanidkomplex-Katalysator wird bevorzugt in Anteilen, bezogen auf die Masse an zu erzeugendem Produkt, von weniger als 250 ppm, besonders bevorzugt von weniger als 100 ppm, insbesondere von weniger als 50 ppm, eingesetzt.

Das Verfahren wird erfindungsgemäß in einem vertikalen, hochzylindrischen Reaktor mit einer im oberen Reaktorbereich angeordneten, nach unten gerichteten Strahldüse, über die die Edukte und das Reaktionsgemisch zugeführt werden sowie mit einem Abzug bevorzugt im unteren Reaktionsbereich, über den das Reaktionsgemisch in einem äußeren Kreislauf mittels einer Pumpe über einen Ausgleichsbehälter der Strahldüse erneut zugeführt wird, mit einem konzentrischen Leitrohr, das sich über die gesamte Länge des Reaktors mit Ausnahme der Reaktorenden erstreckt sowie mit einem im Ringraum integrierten Wärmetauscher durchgeführt.

Ein derartiger Reaktor ist beispielsweise in der deutschen Patentanmeldung 19854637.8 beschrieben.

In einem solchen Reaktor bildet sich über die nach unten gerichtete Strahldüse im Leitrohr von oben nach unten und im Ringraum zwischen Leitrohr und Reaktorinnenraum von unten nach oben eine interne Schlaufenströmung aus. Der überwiegende Teil des Reaktionsgemisches wird in dieser internen Schlaufenströmung geführt, lediglich ein geringer Anteil des Reaktionsgemisches wird über den äußeren Kreislauf umgepumpt und sorgt über die Strahldüse für den Antrieb der Schlaufenströmung.

Das Verhältnis der Volumenströme von interner Schlaufenströmung zu extern umgepumpten Reaktionsgemisch beträgt 2 bis 30, bevorzugt 5 bis 10.

Die interne Schlaufenströmung gewährleistet eine ideale Durchmischung einer hohen Temperaturkonstanz und einem Ausbleiben von Zonen mit Alkylenkonzentration, wo aufgrund der höheren Geschwindigkeiten lokale Übertemperaturen auftreten könnten. Zudem wird mittels der im Ringraum integrierten Wärmetauscher die Reaktionswärme am Ort ihres Entstehens abgeführt mit der Folge einer hohen Isothermie der Reaktion, d. h. einem sehr kleinen Temperaturgradienten über die Reaktorhöhe. Nach dem erfindungsgemäßen Verfahren können somit Beschränkungen der Reaktionsgeschwindigkeit durch Stoff- oder Wärmetransport praktisch vollständig ausgeschaltet werden. Nebenreaktionen, die sonst durch Temperaturgradienten im Reaktionssystem begünstigt werden, werden praktisch vollständig unterdrückt.

In der bevorzugten Verfahrensvariante, wonach der überwiegende Teil des Reaktionsgemisches in der internen Schlaufenströmung geführt wird und lediglich ein geringer Anteil des Reaktionsgemisches extern umgepumpt wird, werden deutlich geringere Mengen an Katalysator pro Zeiteinheit über die Kreislaufpumpe umgewälzt. Dies führt zu einer Verringerung der mechanischen Katalysatorbeanspruchung und damit zu einer längeren Lebensdauer.

In einer bevorzugten Ausführungsform weist das konzentrische Leitrohr eine Querschnittsfläche im Bereich von 1/10 bis zu Hälfte der Querschnittsfläche des Reaktors auf. Die Strahldüse ist bevorzugt oberhalb des oberen Endes des Leitrohrs, insbesondere um 1/8 des Leitrohrdurchmessers bis zu einem Leitrohrdurchmesser beabstandet angeordnet oder taucht in das Leitrohr, in eine Tiefe bis zu mehreren Leitrohrdurchmessern, ein.

Das Leitrohr ist in der Regel als einfaches Rohr ausgestaltet, es ist jedoch auch möglich, das Leitrohr als rohrförmigen Plattenwärmetauscher oder als spiralförmiges Kühlrohr auszugestalten.

Bevorzugt kann im Reaktorbereich unterhalb des unteren Endes des Leitrohrs ein Prallplatte angeordnet sein, bevorzugt um einen Leitrohrdurchmesser beabstandet. Die Prallplatte bewirkt, zusammen mit dem konzentrischen Leitrohr, die Stabilisierung der internen Schlaufenströmung im Reaktor. Neben der Strömungsumkehr bewirkt die Prallplatte, daß keine Gasblasen in den äußeren Kreislauf mitgerissen werden und die Pumpe beschädigen.

Die im Ringraum integrierten Wärmetauscher sind bevorzugt so ausgestaltet, daß sie die interne Schlaufenströmung nach Möglichkeit nicht behindern und keine Turbulenzen hervorrufen. Als Wärmetauscher können beispielsweise mit einem Kühlmedium durchströmte Rohre, die bevorzugt parallel zur Reaktorwand angeordnet sind, eingesetzt werden, Plattenwärmetauscher, die ebenfalls vorzugsweise parallel zur Reaktorwand verlaufen oder auch unten geschlossene Siederohre, sogenannte Fieldrohre wie sie beispielsweise in EP-A-0 263 935 beschrieben sind, eingesetzt werden. Bei der Verwendung von Fieldrohren ist es möglich, den entstehenden Dampf als Prozeßdampf zu nutzen.

Die Strahldüse ist bevorzugt als Einstoffdüse ausgebildet. In dieser Verfahrensvariante wird nur das flüssige Reaktionsgemisch eingedüst und Gas, beispielsweise Stickstoff sowie Alkylenoxide aus dem Gasraum oberhalb des Flüssigkeitsspiegels im flüssigen Reaktionsgemisch dispergiert. Zusätzlich kann eine Vorrichtung für die Zuführung von einem oder mehreren gasförmigen Reaktanten. bevorzugt eine oder mehrere, insbesondere 1 bis 3 Ringrohre, mit einer Vielzahl von Öffnungen, insbesondere im unteren Reaktorbereich oder über die Reaktorhöhe verteilt, in den Ringraum zwischen Leitrohr und Reaktorinnenraum vorgesehen sein. Vorteilhaft bei einer Einstoffdüse ist deren einfacher Aufbau.

Um die Volumenausdehnung des Reaktionsgemisches mit fortschreitender Reaktion auffangen zu können, ist erforderlich, im äußeren Kreislauf einen Ausgleichsbehälter vorzusehen. Als Ausgleichsbehälter kann ein statischer Mischer oder ein Rührkessel eingesetzt werden, worin die Reaktionsmischung ideal durchmischt wird. Zur Beginn der Reaktion ist der Ausgleichsbehälter leer und der Starter zusammen mit dem Multimetallcyanidkomplex-Katalysators im Reaktor vorgelegt. Zwecks Verringerung der Zykluszeiten kann das Anspringen des Katalysators, d. h. die Aktivierung des Katalysators mit den Alkylenoxiden in einem separaten Behälter erfolgen. Nach dem Anspringen kann die aktive Multimetallcyanidkomplex-Katalysator/Starter-Mischung weiter verdünnt werden, ohne die Aktivität des Katalysators wesentlich zu verringern. Um die bei Weichschaumpolyolen zu erwartende Volumenausdehnung auf das 3 bis 100-fache, bevorzugt 5 bis 50-fache, auffangen zu können, muß der Behälter um den entsprechenden Faktor größer sein gegenüber dem Volumen des Reaktors. Aufgrund der hohen Aktivität des Multimetallcyanidkomplex-Katalysators ist keine Akkumulation von Alkylenoxid im Ausgleichsbehälter zu erwarten, da das Alkylenoxid bereits im Reaktor selbst vollständig abreagiert. Der Druck im Ausgleichsbehälter wird über Stickstoff konstant gehalten. Eine Wärmeabfuhr ist nicht erforderlich, denn die Wärme wird bereits im Reaktor selbst abgeführt. Nach Beendigung der Alkoxidierung werden Reaktor und Ausgleichsbehälter entleert und das Produkt weiter aufgearbeitet.

Die Umsetzung im Reaktor findet vorzugsweise bei einer Temperatur im Bereich von 90 bis 200°C und einem Druck im Bereich von 1 bis 50 bar statt.

Besonders bevorzugt wird die Umsetzung bei einer Temperatur im Bereich von 110 bis 140°C und einem Druck im Bereich von 2 bis 10 bar durchgeführt.

Der Leistungseintrag beträgt vorzugsweise etwa 15 bis 30 kW/l an der Düse, im gesamten Reaktionssystem 3 bis 10 kW/l.

Durch die Dispergierung der einzelnen Reaktanden wird in Verbindung mit den übrigen Reaktionsparametern eine intensive Durchmischung aller Komponenten bei niedrigen Substratkonzentrationen, mit hohen Stoffübergangskoeffizienten und hohen volumenspezifischen Phasengrenzflächen erreicht. Die Anordnung von Wärmetauschern im Ringraum, bevorzugt parallel zu den Reaktorwänden hat eine nahezu vollständige Gradientenfreiheit des Reaktorinhalts bezüglich der Reaktionstemperatur zur Folge. Durch Vermeidung örtlicher Überhitzungen werden Nebenreaktionen deutlich zurückgedrängt und eine Katalysatordesaktivierung weitgehend vermieden. In der Folge werden hohe Raumzeitausbeuten erreicht bei gleichzeitiger Verbesserung der Produktqualität.

Die Erfindung wird im folgenden anhand eines Ausführungsbeispiels näher erläutert.

**Beispiel:**

Es wurde ein zylindrischer Reaktor mit einem Gesamtvolumen von 12 m$^3$ eingesetzt, das Leitrohr hatte eine Länge von 5,80 m und einen Durchmessser von 0,2 m. Als Wärmetauscher im Ringraum wurden 460 Fieldrohre mit einer Länge von 6,50 m und einem Außendurchmesser von 3 cm verwendet. Es wurden 2,49 kg/s Propylenoxid und 0,2 kg/s Polyetherol mit einer Molmasse von 400 g/mol kontinuierlich dem Reaktor zugeführt.

Die Herstellung des Multimetallcyanidkatalysators erfolgte in einem zweistufigen Prozeß, wonach zunächst die Säure und anschließend der Katalysator durch Fällung erhalten wurde. Hierzu wurden 7 l stark saurer Ionenaustauscher, der sich in der Natriumform befand, und zwar Amberlite® 252 Na der Firma Rohm & Haas in eine Austauschersäule mit der Länge von 1 m und dem Volumen von 7,7 l gefüllt. Der Ionenaustauscher wurde anschließend in die Säureform überführt, indem 10 %ige Salzsäure mit einer Geschwindigkeit von 2 Bettvolumen pro Stunde 9 Stunden lang über die Austauschersäule gefahren wurde, bis der Natrium-Gehalt im Austrag < 1 ppm war. Anschließend wurde der Ionenaustauscher mit Wasser gewaschen. Der regenerierte Ionenaustauscher wurde daraufhin benutzt, um eine im wesentlichen alkalifreie Hexacyanocobaltatsäure herzustellen. Hierzu wurde eine 0,24 molare Lösung von Kaliumhexacyanocobaltat in Wasser mit einer Geschwindigkeit von einem Bettvolumen pro Stunde über den Ionenaustauscher gefahren. Nach 2,5 Bettvolumen wurde von der Kaliumhexacyanocobaltat-Lösung auf Wasser gewechselt. Die erhaltenen 2,5 Bettvolumen hatten im Mittel einen Gehalt von 4,5 Gew.-% Hexacyanocobaltatsäure und Alkaligehalte < 1ppm.

Zur Herstellung des Katalysators wurden anschließend 8553,5 g Zinkacetat-Lösung (Gehalt an Zinkacetat-Dihydrat: 8,2 Gew.-%, Gehalt an Pluronic® PE 6200, d.h. einem Blockcopolymer aus Ethylenoxid und Propylenoxid, das zur Steuerung der Kristallmorphologie eingesetzt wird, 1,3 Gew.-%) in einem 20 l-Reaktor vorgelegt und unter Rühren auf 60°C hochgeheizt. Anschließend wurden 9956 g Hexacyanocobaltatsäure-Lösung (Cobaltgehalt 9 g/l, Gehalt an Pluronic® PE 6200 1,3 Gew.-%) innerhalb von 20 min bei 60°C unter stetigem Rühren zugeführt. Die erhaltene Suspension wurde noch weitere 60 min bei 60°C nachgerührt. Anschließend wurde der so erhaltene Feststoff abfiltriert und mit dem 6-fachen des Kuchenvolumens gewaschen. Der feuchte Filterkuchen wurde anschließend in Polypropylenglykol der Molmasse 400 g/mol dispergien.

Die so erhaltene Dispersion wurde als Katalysator eingesetzt. Die Katalysatorkonzentration betrug 60 ppm und die Reaktortemperatur konnte über die vollständige Reaktorlänge auf 125 ± 0,2°C konstant gewährleistet werden. Die erreichte mittlere Molmasse betrug 5200 g/mol, hochmolekulare Bestandteile konnten nicht nachgewiesen werden. Es wurde eine maximale Raum-Zeit-Ausbeute von 807 kg/m$^3$/h erreicht.

In einem analogen Vergleichsversuch in einem 200 l Rührkesselreaktor mit außenliegendem Wärmetauscher wurde bei gleicher Katalysatorkonzentration aufgrund der begrenzten Wärmeabfuhrleistung eine maximale Raum-Zeit-Ausbeute von 450 kg/m$^3$/h erreicht. In beiden Fällen konnte ein Cycloacetalgehalt von 0,04 ppm und ein Gehalt an ungesättigten Bestandteilen von 0,005 meq/g erreicht werden. Es wurde eine vollkommen symmetrische Molekularmassenverteilung erhalten.

In einem Vergleichsexperiment unter KOH-Katalyse (0,3 Massen %) wurde bei einer analogen Synthese eine Raum-Zeit-Ausbeute von 105 kg/m$^3$/h erreicht, die Cycloacetalkonzentration betrug 4,8 ppm und die Konzentration an ungesättigten Bestandteilen lag bei 0,061 meq/g. Weiterhin wurden hochmolekulare Bestandteile nachgewiesen.

Das erfindungsgemäße Verfahren ermöglichte somit bei gleicher Produktqualität eine signifikant höhere Raum-Zeit-Ausbeute.

Das Experiment wurde unter Verwendung des Reaktors mit Ausgleichsbehälter wiederholt, wobei sich die gleichen Produkteigenschaften ergaben. Die Raum-Zeit-Ausbeute betrug 790 kg/m$^3$/h, ohne Berücksichti-

gung der Zeiten für Be- und Entladen des Reaktors.

**Patentansprüche**

1. Verfahren zur Herstellung von Polyetherpolyolen durch Umsetzung von Diolen oder Polyolen mit Ethylenoxid, Propylenoxid, Butylenoxid oder Gemischen hiervon in Gegenwart eines Multimetallcyanidkomplex-Katalysators, dadurch gekennzeichet, daß die Umsetzung in einem Reaktor in hochzylindrischer Bauform, mit einer im oberen Reaktorbereich angeordneten, nach unten gerichteten Strahldüse, über die die Edukte und das Reaktionsgemisch zugeführt werden sowie mit einem Abzug bevorzugt im unteren Reaktorbereich, über den das Reaktionsgemisch in einem äußeren Kreislauf mittels einer Pumpe über einen Ausgleichsbehälter der Strahldüse erneut zugeführt wird, mit einem konzentrischen Leitrohr, das sich über die gesamte Länge des Reaktors mit Ausnahme der Reaktorenden erstreckt sowie mit einem im Ringraum integrierten Wärmetauscher, durchgeführt wird.

2. Verfahren nach Anspruch 1, **dadurch gekennzeichnet, daß** das konzentrische Leitrohr eine Querschnittsfläche im Bereich von 1/10 bis zur Hälfte der Querschnittsfläche des Reaktors aufweist und daß die Strahldüse oberhalb des oberen Endes des Leitrohrs, bevorzugt um 1/8 des Leitrohrdurchmessers bis zu einem Leitrohrdurchmesser beabstandet, angeordnet ist oder in das Leitrohr, in eine Tiefe bis zu mehreren Leitrohrdurchmessern eintaucht.

3. Verfahren nach Anspruch 1 oder 2, **dadurch gekennzeichnet, daß** der überwiegende Teil des Reaktionsgemisches, entsprechend dem 2- bis 30-fachen, bevorzugt dem 5- bis 10-fachen des Volumenstroms des extern umgepumpten Reaktionsgemisches in einer internen Schlaufenströmung das Leitrohr von oben nach unten und den Ringraum zwischen Leitrohr und Reaktorinnenwand von unten nach oben durchströmt.

4. Verfahren nach einem der Ansprüche 1 bis 3, **dadurch gekennzeichnet, daß** die Umsetzung bei einer Temperatur im Bereich von 90 bis 200°C und bei einem Druck im Bereich von 1 bis 50 bar durchgeführt wird.

5. Verfahren nach Anspruch 4, **dadurch gekennzeichnet, daß** die Umsetzung bei einer Temperatur im Bereich von 110 bis 140°C und bei einem Druck im Bereich von 2 bis 10 bar durchgeführt wird.

6. Verfahren nach einem der Ansprüche 1 bis 5, **dadurch gekennzeichnet, daß** der Multimetallcyanidkomplex-Katalysator in einer Konzentration, bezogen auf die Masse an zu erzeugendem Produkt, von weniger als 250 ppm, bevorzugt von weniger als 100 ppm, besonders bevorzugt von weniger als 50 ppm, eingesetzt wird.

7. Verfahren nach einem der Ansprüche 1 bis 6, **dadurch gekennzeichnet, daß** die Strahldüse als Einstoffdüse ausgebildet ist und daß gegebenenfalls zusätzlich eine Vorrichtung für die Zuführung von einem oder mehreren gasförmigen Reaktanden, bevorzugt ein oder mehrere, insbesondere ein bis drei Ringrohre, mit einer Vielzahl von Öffnungen, insbesondere im unteren Reaktorbereich oder über die Reaktorhöhe verteilt, in den Ringraum zwischen Leitrohr und Reaktorinnenwand, vorgesehen ist (sind).

8. Verfahren nach einem der Ansprüche 1 bis 7, **dadurch gekennzeichnet, daß** im Reaktorbereich unterhalb des unteren Endes des Leitrohrs eine Prallplatte, bevorzugt um einen Leitrohrdurchmesser beabstandet, angeordnet ist.

9. Verfahren nach einem der Ansprüche 1 bis 8, **dadurch gekennzeichnet, daß** der Multimetallcyanidkomplex-Katalysator der allgemeinen Formel (I)

$$M^1{}_a[M^2(CN)_bL^1{}_c]_d \cdot e(M^1{}_fX_g) \cdot hL^2 \cdot iH_2O$$

(I)

entspricht, in der
$M^1$ mindestens ein Element aus der Gruppe, bestehend aus Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II), Cd(II), Hg(II), Pd (II), Pt(II), V(III), Mg(II), Ca(II), Sr(II), Ba(II) und Cr (III) ist,
$M^2$ mindestens ein Element aus der Gruppe, bestehend aus Fe(II), Fe(III), Co(III), Cr(III), Mn(II), Mn (III), Ir(III), Rh(III), Ru(II), V(IV), V(V), Co(II) und Cr (II) ist,
$L^1$ mindestens ein Ligand aus der Gruppe, bestehend aus Cyanid, Carbonyl, Cyanat, Isocyanat, Nitril, Thiocyanat und Nitrosyl ist,
X ein Formiatanion, Acetatanion oder Propionatanion,
$L^2$ mindestens ein mit Wasser mischbarer Ligand aus der Gruppe, bestehend aus Alkoholen, Aldehyden, Ketonen, Ethern, Polyethern, Estern, Harnstoffderivaten, Amiden, Nitrilen und Sulfiden ist,
a, b , d, e, f, g, ganze oder gebrochene Zahlen größer Null
c, h, i ganze oder gebrochene Zahlen größer oder gleich Null sind, wobei
a, b, c und d so gewählt sind, daß die Elektroneutralitätsbedingung erfüllt ist und

f und g so gewählt sind, daß die Elektroneutralitätsbedingung erfüllt ist, dessen Röntgendiffraktogramm Reflexe bei mindestens den d-Werten

6,10 Å ± 0,04 Å

5,17 Å ± 0,04 Å

4,27 Å ± 0,02 Å

3,78 Å ± 0,02 Å

3,56 Å ± 0,02 Å

3,004 Å ± 0,007 Å

2,590 Å ± 0,006 Å

2,354 Å ± 0,004 Å

2,263 Å ± 0,004 Å

aufweist, wenn X ein Formiatanion ist, dessen Röntgendiffraktorgramm Reflexe bei mindestens den d-Werten

5,20 Å ± 0,02 Å

4,80 Å ± 0,02 Å

3,75 Å ± 0,02 Å

3,60 Å ± 0,02 Å

3,46 Å ± 0,01 Å

2,824 Å ± 0,008 Å

2,769 Å ± 0,008 Å

2,608 Å ± 0,007 Å

2,398 Å ± 0,006 Å

aufweist, wenn X ein Acetatanion ist, und dessen Röntgendiffraktorgramm Reflexe bei mindestens den d-Werten

5,59 Å ± 0,05 Å

5,40 Å ± 0,04 Å

4,08 Å ± 0,02 Å

3,94 Å ± 0,02 Å

3,76 Å ± 0,02 Å

3,355 Å ± 0,008 Å

3,009 Å ± 0,007 Å

2,704 Å ± 0,006 Å

2,381 Å ± 0,004 Å

aufweist, wenn X ein Propionatanion ist, oder die ein moloklines Kristallsystem aufweisen, wenn X ein Acetatanion ist.

10. Verfahren nach einem der Ansprüche 1 bis 9, **dadurch gekennzeichnet, daß** der Multimetallcyanidkomplex-Katalysator weitgehend oder vollständig kristallin ist.

11. Verfahren nach Anspruch 10, **dadurch gekennzeichnet, daß** ein Multimetallcyanidkomplex-Katalysator vom Zink-Kobalt-Typ verwendet wird.

**Claims**

1. A process for the preparation of polyetherpolyols by reacting diols or polyols with ethylene oxide, propylene oxide, butylene oxide or a mixture thereof in the presence of a multimetal cyanide complex catalyst, wherein the reaction is carried out in a reactor of upright cylindrical design, comprising a jet nozzle which is arranged in the upper reactor region and is directed downward and via which the starting materials and the reaction mixture are fed in, and comprising a take-off, preferably in the lower reactor region, via which the reaction mixture is fed back to the jet nozzle in an external circulation via means of a pump via an equilibration container, comprising a concentric guide tube which extends over the total length of the reactor, except for the reactor ends, and comprising a heat exchanger integrated in the annular space.

2. A process as claimed in claim 1, wherein the concentric guide tube has a cross-sectional area of from 1/10 to half the cross-sectional area of the reactor and wherein the jet nozzle is arranged above the upper end of the guide tube, preferably from 1/8 of the guide tube diameter to one guide tube diameter away, or dips into the guide tube to a depth of up to several guide tube diameters.

3. A process as claimed in claim 1 or 2, wherein the predominant part of the reaction mixture, corresponding to 2 to 30, preferably 5 to 10, times the volume flow of the externally circulated reaction mixture flows in an internal loop flow through the guide tube from top to bottom and through the annular space between guide tube and reactor inner wall from bottom to top.

4. A process as claimed in any of claims 1 to 3, wherein the reaction is carried out at from 90 to 200°C and from 1 to 50 bar.

5. A process as claimed in claim 4, wherein the reaction is carried out at from 110 to 140°C and from 2 to 10 bar.

6. A process as claimed in any of claims 1 to 5, wherein the multimetal cyanide complex catalyst is used in a concentration of less than 250 ppm, preferably less than 100 ppm, more preferably less than 50 ppm, based on the mass of product to be produced.

7. A process as claimed in any of claims 1 to 6, wherein the jet nozzle is in the form of a single-material nozzle and wherein additionally, if required, an apparatus for feeding in one or more gaseous reactants, preferably one or more, in particular from 1 to 3, annular tubes having a multiplicity of orifices, in particular distributed in the lower reactor region or over the reactor height, is (are) provided in the annular space between guide tube and reactor inner wall.

8. A process as claimed in any of claims 1 to 7, wherein an impact plate is arranged in the reactor region below the lower end of the guide tube, preferably one guide tube diameter away.

9. A process as claimed in any of claims 1 to 8, wherein the multimetal cyanide complex catalyst is of the formula (I)

$$M^1{}_a[M^2(CN)_bL^1{}_c]_d \cdot e(M^1{}_fX_g) \cdot hL^2 \cdot iH_2O \quad (I)$$

where
$M^1$ is at least one element from the group consisting of Zn(II), Fe(II), Co(III), Ni(II), Mn(II), Co(II), Sn(II), Pb(II), Fe(III), Mo(IV), Mo(VI), Al(III), V(IV), V(V), Sr(II), W(IV), W(VI), Cu(II), Cd(II), Hg(II), Pd(II), Pt(II), V(III), Mg(II), Ca(II), Sr(II), Ba(II) and Cr(III),
$M^2$ is at least one element from the group consisting of Fe(II), Fe(III), Co(III), Cr(III), Mn(II), Mn(III), Ir(III), Rh(III), Ru(II), V(IV), V(V), Co(II) and Cr(II),
$L^1$ is at least one ligand from the group consisting of cyanide, carbonyl, cyanate, isocyanate, nitrile, thiocyanate and nitrosyl,
X is a formate anion, acetate anion or propionate anion,
$L^2$ is at least one water-miscible ligand from the group consisting of alcohols, aldehydes, ketones, ethers, polyethers, esters, urea derivatives, amides, nitriles and sulfides,
a, b, d, e, f and g are integers or fractions greater than zero,
c, h and i are integers or fractions greater than or equal to zero, a, b, c and d being chosen so that the electroneutrality condition is fulfilled and
f and g have been chosen so that the electroneutrality condition is fulfilled,
whose X-ray diffraction pattern has reflections at at least the d values

6.10 Å ± 0.04 Å

5.17 Å ± 0.04 Å

4.27 Å ± 0.02 Å

3.78 Å ± 0.02 Å

3.56 Å ± 0.02 Å

3.004 Å ± 0.007 Å

2.590 Å ± 0.006 Å

2.354 Å ± 0.004 Å

2.263 Å ± 0.004 Å

if X is a formate anion, whose X-ray diffraction pattern has reflections at at least the d values

5.20 Å ± 0.02 Å

4.80 Å ± 0.02 Å

3.75 Å ± 0.02 Å

3.60 Å ± 0.02 Å

3.46 Å ± 0.01 Å

2.824 Å ± 0.008 Å

2.769 Å ± 0.008 Å

2.608 Å ± 0.007 Å

2.398 Å ± 0.006 Å

if X is an acetate anion, and whose X-ray diffraction pattern has reflections at at least the d values

5.59 Å ± 0.05 Å

5.40 Å ± 0.04 Å

4.08 Å ± 0.02 Å

3.94 Å ± 0.02 Å

3.76 Å ± 0.02 Å

3.355 Å ± 0.008 Å

3.009 Å ± 0.007 Å

2.704 Å ± 0.006 Å

2.381 Å ± 0.004 Å

if X is a propionate anion, or which have a monoclinic crystal system if X is an acetate anion.

10. A process as claimed in any of claims 1 to 9, wherein the multimetal cyanide complex catalyst is substantially or completely crystalline.

11. A process as claimed in claim 10, wherein a multimetal cyanide complex catalyst of the zinc-cobalt type is used.

**Revendications**

1. Procédé pour la préparation de polyétherpolyols par réaction de diols ou de polyols avec de l'oxyde d'éthylène, de l'oxyde de propylène, de l'oxyde de butylène ou des mélanges de ceux-ci en présence d'un catalyseur complexe cyanure-polymétal, **caractérisé en ce que** la réaction est réalisée dans un réacteur présentant une construction haute, cylindrique, avec un gicleur de pulvérisation disposé dans la partie supérieure du réacteur, dirigé vers le bas, via lequel les produits de départ et le mélange réactionnel sont introduits ainsi qu'avec une évacuation, de préférence dans la partie inférieure du réacteur, via laquelle le mélange réactionnel dans un circuit extérieur peut à nouveau être introduit dans le gicleur de pulvérisation au moyen d'une pompe via un récipient de compensation, avec une conduite concentrique qui s'étend sur toute la longueur du réacteur, à l'exception des extrémités du réacteur ainsi qu'avec un échangeur de chaleur intégré dans l'espace annulaire.

2. Procédé selon la revendication 1, **caractérisé en ce que** la conduite concentrique présente une section transversale dans la plage de 1/10 à la moitié de la section transversale du réacteur et **en ce que** le gicleur de pulvérisation est disposé au-dessus de l'extrémité supérieure de la conduite, en étant de préférence écarté d'une distance de 1/8 du diamètre de la conduite jusqu'à un diamètre de la conduite ou pénètre dans la conduite, à une profondeur pouvant correspondre à plusieurs diamètres de la conduite.

3. Procédé selon la revendication 1 ou 2, **caractérisé en ce que** la partie essentielle du mélange réactionnel, correspondant à 2 à 30 fois, de préférence à 5 à 10 fois, le flux volumique du mélange réactionnel pompé dans le circuit extérieur passe, en un flux en boucle interne, du haut vers le bas dans la conduite et du bas vers le haut dans l'espace annulaire entre la conduite et la paroi intérieure du réacteur.

4. Procédé selon l'une quelconque des revendications 1 à 3, **caractérisé en ce que** la réaction est réalisée à une température dans la plage de 90 à 200°C et à une pression dans la plage de 1 à 50 bars.

5. Procédé selon la revendication 4, **caractérisé en ce que** la réaction est réalisée à une température dans la plage de 110 à 140°C et à une pression dans la plage de 2 à 10 bars.

6. Procédé selon l'une quelconque des revendications 1 à 5, **caractérisé en ce que** le catalyseur complexe cyanure-polymétal est utilisé en une concentration, par rapport à la masse de produit à produire, inférieure à 250 ppm, de préférence inférieure à 100 ppm, de manière particulièrement préférée inférieure à 50 ppm.

7. Procédé selon l'une quelconque des revendications 1 à 6, **caractérisé en ce que** le gicleur de pulvérisation est réalisé sous forme d'un gicleur à une seule substance et **en ce qu'**on prévoit en outre, le cas échéant, un dispositif pour l'introduction d'un ou de plusieurs réactifs gazeux, de préférence un ou plusieurs, en particulier un à trois, tuyaux annulaires, avec une multitude d'ouvertures, en particulier dans la zone inférieure du réacteur ou répartis sur la hauteur du réacteur, dans l'espace annulaire entre la conduite et la paroi intérieure du réacteur.

8. Procédé selon l'une quelconque des revendications 1 à 7, **caractérisé en ce qu'**on a disposé dans la zone du réacteur, au-dessous de l'extrémité inférieure de la conduite, une tôle de chicane, de préférence écartée d'un diamètre de conduite.

9. Procédé selon l'une quelconque des revendications 1 à 8, **caractérisé en ce que** le catalyseur complexe cyanure-polymétal correspond à la formule générale (I)

$$M^1_a[M^2(CN)_bL^1_c]_d. e(M^1_fX_g). hL^2.iH_2O \quad (I)$$

dans laquelle
$M^1$ représente au moins un élément du groupe constitué par Zn(II), Fe(II), Co(III), Ni(II), Mn(II), Co (II), Sn(II), Pb(II), Fe(III), Mo(IV), Mo(VI), Al(III), V (IV), V(V), Sr(II), W(IV), W(VI), Cu(II), Cd(II), Hg(II), Pd(II), Pt(II), V(III), Mg(II), Ca(II), Sr(II), Ba(II) et Cr (III),
$M^2$ représente au moins un élément du groupe constitué par Fe(II), Fe(III), Co(III), Cr(III), Mn(II), Mn(III), Ir(III), Rh(III), Ru(II), V(IV), V(V), Co(II) et Cr (II),
$L^1$ représente au moins un ligand du groupe constitué par les ligands cyanure, carbonyle, cyanate, isocyanate, nitrile, thiocyanate et nitrosyle,
X représente un anion formiate, un anion acétate ou un anion propionate,
$L^2$ représente au moins un ligand miscible à l'eau du groupe constitué par les alcools, les aldéhydes, les cétones, les éthers, les polyéthers, les esters, les dérivés de l'urée, les amides, les nitriles et les sulfures,
a, b, d, e, f, g représentent des nombres entiers ou décimaux supérieurs à zéro
c, h, i représentent des nombres entiers ou décimaux, supérieurs ou égaux à zéro, a, b, c et d étant choisis de telle manière que la condition d'électroneutralité est satisfaite et f et g étant choisis de telle manière que la condition d'électroneutralité est satisfaite,
dont le diffractogramme de rayons X présente au moins des réflexions aux valeurs d

$$6,10 \text{ Å} \pm 0,04 \text{ Å}$$

$$5,17 \text{ Å} \pm 0,04 \text{ Å}$$

$$4,27 \text{ Å} \pm 0,02 \text{ Å}$$

$$3,78 \text{ Å} \pm 0,02 \text{ Å}$$

$$3,56 \text{ Å} \pm 0,02 \text{ Å}$$

$$3,004 \text{ Å} \pm 0,007 \text{ Å}$$

$$2,590 \text{ Å} \pm 0,006 \text{ Å}$$

$$2,354 \text{ Å} \pm 0,004 \text{ Å}$$

$$2,263 \text{ Å} \pm 0,004 \text{ Å}$$

lorsque X est un anion formiate, dont le diffractogramme de rayons X présente au moins des réflexions aux valeurs d

5,20 Å ± 0,02 Å

4,80 Å ± 0,02 Å

3,75 Å ± 0,02 Å

3,60 Å ± 0,02 Å

3,46 Å ± 0,01 Å

2,824 Å ± 0,008 Å

2,769 Å ± 0,008 Å

2,608 Å ± 0,007 Å

2,398 Å ± 0,006 Å

lorsque X est un anion acétate, et dont le diffractogramme de rayons X présente au moins des réflexions aux valeurs d

5,59 Å ± 0,05 Å

5,40 Å ± 0,04 Å

4,08 Å ± 0,02 Å

3,94 Å ± 0,02 Å

3,76 Å ± 0,02 Å

3,355 Å ± 0,008 Å

3,009 Å ± 0,007 Å

2,704 Å ± 0,006 Å

2,381 Å ± 0,004 Å

lorsque X est un anion propionate ou qui présente un système cristallin monoclinique lorsque X est un anion acétate.

10. Procédé selon l'une quelconque des revendications 1 à 9, **caractérisé en ce que** le catalyseur complexe cyanure-polymétal est dans une large mesure ou complètement cristallin.

11. Procédé selon la revendication 10, **caractérisé en ce qu'**on utilise un catalyseur complexe cyanure-polymétal de type zinc-cobalt.